# DEMANDE DE BREVET EUROPEEN

(11) **EP 2 360 657 A2**
(43) Date de publication de la demande: **24.08.2011**
(21) Numéro de dépôt: 10380123.9
(22) Date de dépôt: 04.10.2010
(51) Int. Cl.: G09B 19/00

(54) **Systéme pour la réalisation à l'échelle d'essais de feu dans des aéronefs**

(30) Priorité: 14.01.2010 ES 201030028
(71) Demandeur: Fundacion Centro de Tecnologicas Aeronauticas, 01510 Minano Alava (ES)
(72) Inventeur: Eiriz Gervás, Ignacio, 01510 Miñano (Alava) (ES); Sáez de Ocariz Granja, Idurre, 01510 Miñano (Alava) (ES); López de Santiago, Ion, 01510 Miñano (Alava) (ES); Arbildi Fernández, Ander, 01510 Miñano (Alava) (ES)
(74) Mandataire: Urizar Barandiaran, Miguel Angel

(57) **Abrégé**

Système pour la réalisation d'essais de feu dans des aéronefs, caractérisé par le fait qu'il inclut une maquette à l'échelle de la cabine d'un aéronef qui permet la réalisation d'essais de feu, en simulant différentes conditions d'incendie tant intérieurs qu'extérieurs pour étudier le comportement du feu.
Cette maquette à échelle dispose de :
a) Une structure principale composée de couples et de longeronnets pour le fuselage extérieur et d'un support pour les sièges où sont placés les matériaux testés ; avec deux portes latérales qui permettent d'accéder à l'intérieur de la maquette et une ouverture dans le fuselage permettant que le feu pénètre dans le cas d'incendies extérieurs ; et
b) D'équipements de mesure d'essai qui permettent d'obtenir des lectures des principaux paramètres qui caractérisent le phénomène de la combustion pendant la réalisation des essais.

## Description

### DESCRIPTION

L'objet de la présente invention est un système pour la réalisation à l'échelle d'essais de feu dans des aéronefs, qui se sert d'une coupe de la cabine d'un aéronef à l'échelle, dans laquelle on peut effectuer différentes études de comportement au feu.

Le système objet de l'invention inclut une maquette qui est une reproduction à l'échelle de la cabine d'un aéronef.

L'objectif de l'invention est de pouvoir effectuer des essais de feu à l'échelle, en simulant différentes conditions d'incendie, tant à l'intérieur qu'à l'extérieur de l'aéronef, pour pouvoir étudier le comportement des différents matériaux.

Les avantages de ce système d'essais à l'échelle s'avèrent évidents :
- Il permet de tester différentes conditions d'incendies tant à l'intérieur qu'à l'extérieur de l'aéronef dans des conditions réelles d'utilisation. Ces essais s'avèrent beaucoup plus représentatifs que les essais de caractérisation ou de certification de matériaux, puisque les conditions de montage, d'interrelation entre les différents matériaux, etc. sont pris en considération.
- Ces essais sont beaucoup plus économiques que les essais à l'échelle réelle 1:1. La quantité de matériel nécessaire est inférieure et les montages à effectuer sont beaucoup plus simples.
- Il permet d'obtenir des informations sur les principaux paramètres qui caractérisent le comportement au feu des matériaux avec un seul essai (Émission de chaleur, inflammabilité, concentration et toxicité de fumées).

Pour cette raison, le contenu de la présente demande constitue une invention nouvelle faisant preuve d'inventivité, et pouvant présenter une application industrielle.

Dans le but de mieux comprendre l'objet de la présente invention, une forme préférentielle de réalisation pratique, susceptible de changements accessoires ne dénaturant pas son fondement est représentée sur les plans.

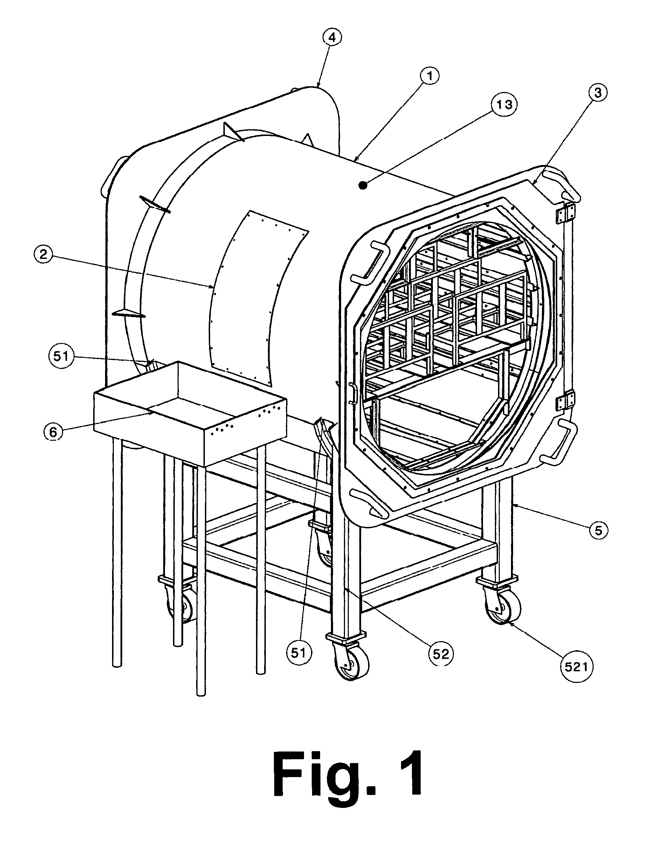

La figure 1 représente une vue générale schématique en perspective de la maquette d'essais à l'échelle.

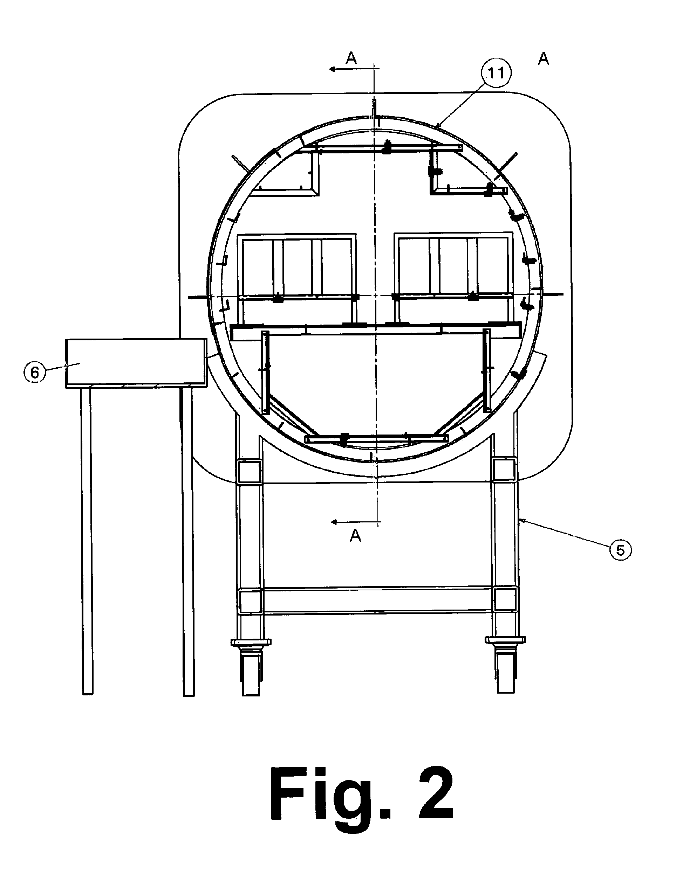

La figure 2 représente une coupe transversale schématique, correspondante à la figure précédente.

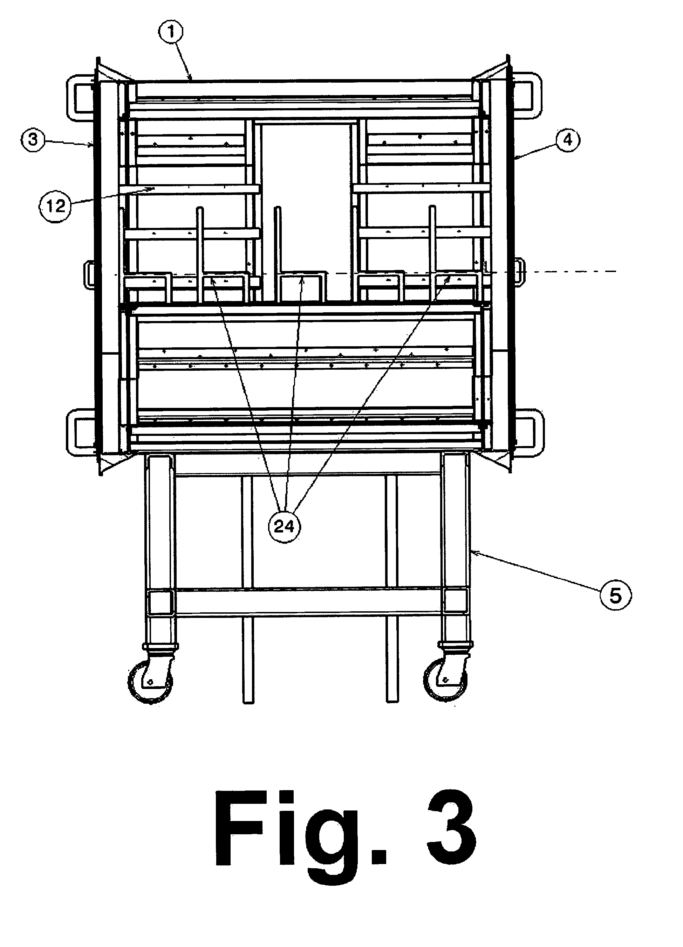

La figure 3 représente une coupe longitudinale schématique, selon l'indication A:A de la figure 2.

Ci-dessous est décrit un exemple de réalisation pratique, non limitative, de la présente invention. D'autres modes de réalisation dans lesquels des changements accessoires ne dénaturant pas son fondement sont introduits ne sont absolument pas écartés ; au contraire, la présente invention comprend aussi toutes ses variantes.

Le système objet de l'invention inclut une maquette qui est une reproduction à l'échelle de la cabine d'un aéronef. En particulier, la maquette est une reproduction à l'échelle 1:4 d'une coupe de 4,2 mètres de longueur de la cabine d'un aéronef modèle A320.

Conformément à l'invention, et selon la réalisation représentée, les éléments principaux dont se compose la maquette à l'échelle 1:4 sont les suivants :
a) Structure principale (1) composée de profils en forme de T courbés qui imitent les couples (11) et de profils en L qui imitent les longeronnets (12) de la structure de l'aéronef. Pour le fuselage (13), de la tôle pliée de 1,5 mm d'épaisseur et vissée est utilisée. Toute la structure (1) est en acier inoxydable (AlSl 304). Les longeronnets (12) et les couples (11) disposent d'un patron de trous filetés pour permettre de soutenir les différents matériaux intérieurs, par exemple les panneaux, sols, sièges, moquettes, etc.). On dispose de cette manière d'un total de dix files de fauteuils (24) - profils en L - où l'on peut monter les coussins des sièges correspondants à la longueur de cette coupe de la cabine. Le fuselage (13) dispose d'une ouverture (2) dans la zone centrale d'une dimension de 550 x 255 mm. Cette ouverture (2) peut être couverte au moyen de tôle vissée de même dimension.
b) deux portes latérales (3), (4) avec des charnières qui permettent de les fermer avec des brides de fixation et avec des vitres en verre résistant aux hautes températures. La fonction de ces portes latérales (3), (4) est d'avoir accès à l'intérieur de la cabine pour pouvoir effectuer les montages et de pouvoir enregistrer les essais à travers les vitres.
c) Chariot (5) support de la structure principale (1), composé par deux profils en U (51) qui s'adaptent à la forme du fuselage (13) et quatre pieds (52) qui disposent de roues (521) pour le déplacement et le positionnement rapide et simple de toute la structure (1).
d) Structures pour soutenir les différents équipements de mesure qui sont utilisés dans les essais ; et
e) Plateau de combustible (6).

Les équipements de mesure employés dans les essais sont les suivants :
- Support de calorimètres : Composés d'une tige filetée finissant par une bride avec la forme de la tête des calorimètres. Cette structure est accrochée au plafond de la cabine de l'aéronef.
- Support pour l'ensemble de thermocouples : tige avec cinq trous effectués à différentes hauteurs où la partie finale des thermocouples est introduite.
- Support pour la sonde de l'analyseur de gaz : Tube de diamètre interne égal à celui de la sonde de l'analyseur de gaz placé dans la zone supérieure dans un des côtés de la coupe de la cabine et soudé à la structure (fuselage) et qui permet d'introduire la sonde depuis l'extérieur.

Les équipements de mesure utilisés dans les essais pour l'acquisition de données sont les suivants :
a) Thermocouples:
   - Ensemble de Thermocouples, composé de cinq thermocouples à gaine chemisés de type T placés à différentes hauteurs dans le couloir central de la cabine pour mesurer la distribution verticale de températures du sol au plafond.
   - Thermocouples de contact de type K qui sont placés collés aux différents matériaux de l'intérieur qui sont employés dans chacun des essais pour mesurer l'évolution de la température dans les matériaux.

a) Calorimètres : deux calorimètres réfrigérés à l'eau placés dans deux points différents du couloir de passagers pour mesurer le flux de chaleur présents à ces points.
b) Analyseur de gaz : Utilisé pour mesurer la concentration de gaz dans la cabine tout au long de l'essai. Les gaz qui sont analysés sont les suivants :
   - Concentration d'Oxygène (% volume)
   - Concentration de Monoxyde de Carbone (ppm)
   - Concentration de gaz Nitreux (ppm)
   - Concentration de Dioxyde de soufre (ppm)
   - Concentration d'acide sulfhydrique (ppm)
   - Concentration d'Hydrogène (ppm)

Les équipements de mesure et les structures pour les soutenir ne sont pas décrits plus en détails (ni ne sont représentés), car il s'agit d'accessoires connus en eux-mêmes qui complètent l'objet de l'invention.

Le plateau de combustible (6) est un bassin dont les dimensions sont : 430 x 540 x 150 mm, avec des pieds réglables en hauteur qui permettent de le placer juste sous l'ouverture du fuselage et qui est employé pour simuler les conditions d'un incendie extérieur avec un écoulement de kérosène.

L'application principale de ce système est la réalisation de différents essais de feu dans la maquette à l'échelle, en prenant en considération différentes conditions d'incendie et/ou différents matériaux aéronautiques et en utilisant une même installation.

Les matériaux, dimensions et proportions pourront être variables, ainsi que, en général, les autres détails accessoires ou secondaires qui ne modifient pas, ni changent ou altèrent la qualité essentielle proposée.

Les termes dans lesquels ce mémoire est rédigé sont certains et reflètent fidèlement l'objet décrit, et doivent être entendus dans leur sens le plus vaste, et jamais de manière limitative.

## Revendications

1. Système pour la réalisation d'essais de feu dans des aéronefs, qui se sert d'une coupe de la cabine d'un aéronef à l'échelle, dans laquelle on peut effectuer différentes études de comportement au feu et **caractérisé par le fait qu'**il inclut une maquette à l'échelle de la cabine d'un aéronef qui permet la réalisation d'essais de feu en simulant différentes conditions d'incendie tant intérieurs qu'extérieurs pour l'étude du comportement du feu.

2. Système pour la réalisation d'essais de feu dans des aéronefs, selon la revendication 1, **caractérisé par le fait que** cette maquette à l'échelle dispose de :
a) Une structure principale composée de couples et de longeronnets pour le fuselage extérieur et d'un support pour les sièges où sont placés les matériaux testés ; avec deux portes latérales qui permettent d'accéder à l'intérieur de la maquette et une ouverture dans le fuselage permettant que le feu pénètre dans le cas d'incendies extérieurs ; et
b) D'équipements de mesure d'essai qui permettent d'obtenir des lectures des principaux paramètres qui caractérisent le phénomène de la combustion pendant la réalisation des essais.

3. Système pour la réalisation d'essais de feu dans des aéronefs, selon la revendication 1, **caractérisé par le fait que** cette maquette est réalisée à l'échelle 1:4

4. Système pour la réalisation d'essais de feu dans des aéronefs, selon la revendication 2, **caractérisé par le fait que** ces équipements de mesure incluent, au moins :
- un ensemble de thermocouples (pour contrôler la distribution verticale de la température dans la cabine)
- thermocouples de contact (pour contrôler les températures à la surface des différents matériaux)
- Calorimètres (pour contrôler le flux de chaleur à différents points de la cabine)
- Analyseur de gaz (pour contrôler la concentration de gaz dans la cabine).
